**Europäisches Patentamt**

**European Patent Office**

**Office européen des brevets**

(19)

(11) Veröffentlichungsnummer : **0 426 694 B1**

(12) **EUROPÄISCHE PATENTSCHRIFT**

(45) Veröffentlichungstag der Patentschrift :
25.03.92 Patentblatt 92/13

(51) Int. Cl.$^5$ : **B65G 47/90, B65G 61/00, B65G 57/30, B65G 57/28**

(21) Anmeldenummer : 89907162.5

(22) Anmeldetag : 28.06.89

(86) Internationale Anmeldenummer :
PCT/EP89/00726

(87) Internationale Veröffentlichungsnummer :
WO 90/00146 11.01.90 Gazette 90/02

(54) VORRICHTUNG ZUM STAPELN VON FORMTEILEN.

Teilanmeldung 90125268.4 eingereicht am
28/06/89.

(30) Priorität : 01.07.88 DE 3822363

(43) Veröffentlichungstag der Anmeldung :
15.05.91 Patentblatt 91/20

(45) Bekanntmachung des Hinweises auf die
Patenterteilung :
25.03.92 Patentblatt 92/13

(84) Benannte Vertragsstaaten :
AT BE DE FR GB IT NL SE

(56) Entgegenhaltungen :
EP-A- 0 253 790
DE-A- 3 031 662
DE-A- 3 502 359
US-A- 4 777 783

(73) Patentinhaber : **Gerlach, Karl**
**Odenwaldstrasse 22**
**W-6096 Raunheim (DE)**

(72) Erfinder : **Gerlach, Karl**
**Odenwaldstrasse 22**
**W-6096 Raunheim (DE)**

(74) Vertreter : **Katscher, Helmut, Dipl.-Ing.**
**Bismarckstrasse 29**
**W-6100 Darmstadt (DE)**

EP 0 426 694 B1

EP 0 426 694 B1

## Beschreibung

Die Erfindung betrifft eine Vorrichtung zum Stapeln von Formteilen, insbesondere großen Blechstanzteilen im Automobilbau, in stehender Anordnung in gegenseitigem Abstand in Stapelbehältern, mit einer einen horizontalen Vorstapel von mehreren Formteilen bildenden Vorstapeleinrichtung und mit einer den Vorstapel aufnehmenden Greifvorrichtung, die den Vorstapel in eine aufrechte Stellung schwenkt und die den Stapelbehälter verfahrbar ist wobei die Greifvorrichtung einen Industrieroboter aufweist, der an einem in mehreren Bewegungsachsen bewegbaren Roboterarm einen Greiferrahmen zur Aufnahme des Vorstapels trägt.

Dünnwandige Formteile, insbesondere größere Blechstanzteile für den Automobilbau, müssen zwischen den einzelnen Fertigungsstufen und beim Transport und der Zwischenlagerung vor der Weiterverarbeitung in Stapelbehältern gestapelt aufgenommen werden. Da die Oberfläche dieser Formteile in vielen Fällen gegen eine Beschädigung sehr empfindlich ist, muß bei der Stapelung dafür Sorge getragen werden, daß die Formteile in vorgegebenen Abständen zueinander gehalten werden, wobei diese Abstände jedoch möglichst gering sein sollen, damit bei vorgegebenen Abmessungen des Stapelbehälters eine möglichst große Anzahl von Formteilen aufgenommen werden kann.

Während in der Praxis die Be- und Entladung derartiger Stapelbehälter noch von Hand erfolgt, was mit großem Arbeitsaufwand und Verletzungsgefahren verbunden ist und eine weitere Steigerung der Arbeitsgeschwindigkeit nicht zuläßt, ist bereits eine Vorrichtung bekanntgeworden (DE-A 34 16 277), die einen automatisierten Arbeitsablauf ermöglicht. Eine entlang einem Portal verfahrbare und schwenkbare Greifvorrichtung erfaßt den in der Vorstapeleinrichtung gebildeten horizontalen Stapel von mehreren Formteilen, schwenkt den Vorstapel und bringt ihn in den Stapelbehälter von dessen Stirnseite her ein.

Der Baufaufwand und der Platzbedarf für diese bekannte Vorrichtung in Portalbauweise sind verhältnismäßig hoch. Der Bau der Anlage ist sehr kostspielig, weil es sich vollständig um eine Sonderkonstruktion handelt. Eine getrennte Stapelung von Gutteilen und Nacharbeitsteilen wäre bei der bekannten Vorrichtung mit einem noch wesentlich höheren Platzbedarf und Bauaufwand verbunden.

Bei einer bekannten Vorrichtung der eingangs genannten Gattung (DE-A-35 02 359) werden alle herangeförderten Formteile in einer einzigen Vorstapeleinrichtung aufgenommen. Der so gebildete Vorstapel wird von der Greifvorrichtung des Industrieroboters übernommen und in den Stapelbehälter abgestellt. Wenn unter den herangeförderten Formteilen Nacharbeitsteile sind, so werden diese zusammen mit den Gutteilen im Stapelbehälter aufgenommen und müssen später aussortiert werden. Eine vorherige Aussonderung der Nacharbeitsteile würde eine gesonderte Vorrichtung zum Stapeln dieser Nacharbeitsteile erforderlich machen und wäre daher mit erheblichem zusätzlichem Aufwand verbunden.

Aufgabe der Erfindung ist es daher, eine Vorrichtung der eingangs genannten Gattung so auszugestalten, daß sie bei verhältnismäßig geringem Bauaufwand und geringem Platzanspruch eine getrennte Entsorgung von Nacharbeitsteilen ermöglicht.

Diese Aufgabe wird erfindungsgemäß dadurch gelöst, daß am Ende eines Längsförderers für einzelne Formteile zwei Vorstapeleinrichtungen hintereinander angeordnet sind, die im Greifbereich eines gemeinsamen Industrieroboters liegen, und daß zwei Stapelbehälter beiderseits des Industrieroboters angeordnet sind.

Damit wird in einfacher Weise und mit geringem zusätzlichem Platzbedarf erreicht, daß die Formteile, die in einer vorangehenden Kontrollstation in Gutteile und Nacharbeitsteile unterschieden wurden, in gesonderte Stapelbehälter abgestellt werden. Die unterschiedliche Handhabung von Gutteilen und Nacharbeitsteilen erfolgt hierbei dadurch, daß diese Teile unterschiedlichen Vorstapeleinrichtungen zugeführt und dort jeweils gesondert zu Vorstapeln zusammengefaßt werden.

Derselbe Industrieroboter hat Zugriff auf diese beiden Vorstapeleinrichtungen und setzt die daraus entnommenen Vorstapel in einen Stapelbehälter für Gutteile und einen auf der anderen Seite angeordneten Stapelbehälter für Nacharbeitsteile ein. Unter Berücksichtigung der Tatsache, daß der Industrieroboter und seine Steuerung eine der aufwendigsten und teuersten Baugruppen der gesamten Vorrichtung darstellt, wirkt sich in diesem Fall besonders kostengünstig aus, daß für die Entsorgung der Nacharbeitsteile kein zusätzlicher Industrieroboter erforderlich ist.

Der Industrieroboter kann auf einem längs einer Schlittenbahn auf einem verfahrbaren Schlitten aufgenommen sein. Die Verwendung einer mobilen automatischen Handhabungseinrichtung, nämlich eines Industrieroboters auf einem verfahrbaren Schlitten, ergibt mit geringem Bauaufwand eine sehr flexible und ausbaufähige Anlage von geringem Platzbedarf.

Dabei ist auch zu berücksichtigen, daß Industrieroboter inzwischen auf dem Markt und in vielen Industriebetrieben weit verbreitet sind. Die Verwendung eines solchen Industrieroboters als Handhabungseinrichtung für die Formteile verringert deshalb nicht nur die Baukosten wesentlich, sondern läßt sich auch innerhalb verhältnismäßig kurzer Zeit verwirklichen und ermöglicht bei Wartungsarbeiten und Reparaturen einen kurzfristigen Ersatz.

2

Durch die Verwendung eines Greiferrahmens als Greiforgan am Roboterarm wird die Möglichkeit geschaffen, den in der Vorstapeleinrichtung gebildeten Vorstapel von Formteilen in geordneter Anordnung zu übernehmen und in den Stapelbehälter einzuführen, ohne daß diese Ordnung der Formteile gestört würde. Insbesondere ermöglicht es der Greiferrahmen, alle Formteile des Vorstapels so zu bewegen, daß sie zwischen obere Kopfleisten und untere Bodenleisten des Stapelbehälters eingestellt werden können, indem die Formteile in leicht schräger Stellung zwischen diese Leisten eingefahren und an ihrer endgültigen Position aufrecht gestellt werden, oder die Formteile gemeinsam an einen Stapelbehälter mit Förderketten zu übergeben, beispielsweise nach DE-B- 32 31 964.

Zweckmäßigerweise ist neben dem Industrieroboter ein mehrere Stapelbehälter aufnehmendes Behälterkarussell angeordnet. Da ein solches Behälterkarussell sehr rasch weitergeschaltet werden kann, ist der Zeitaufwand für das Wechseln eines Stapelbehälters in der Beschickungsposition neben dem Industrieroboter sehr gering. Dagegen steht für die Entnahme eines gefüllten Stapelbehälters aus dem Behälterkarussell und die Zuführung eines neuen leeren Stapelbehälters die längere Zeitspanne zur Verfügung, während deren ein Behälter in der Beschickungsstellung beladen wird.

Für eine rasche Umstellung auf Formteile unterschiedlicher Abmessungen ist es vorteilhaft, wenn der Greiferrahmen auswechselbar am Roboterarm angeordnet ist und im Greifbereich des Industrieroboters eine Ablage für mindestens zwei Greiferrahmen liegt. Das Umrüsten des Industrieroboters auf andere Formteile geschieht sehr einfach dadurch, daß der vorher benutzte Greiferrahmen durch eine vom Roboterprogramm gesteuerte Bewegung abgelegt und der daneben bereitgestellte neue Greiferrahmen aufgenommen wird.

Gemäß einer besonders vorteilhaften Ausgestaltung der Erfindung ist vorgesehen, daß die Vorstapeleinrichtung jeweils vier den Rand der Formteile haltende Hubeinheiten aufweist, daß jede Hubeinheit zwei unabhängig voneinander höhenverfahrbare Formteilgreifer aufweist, die einzeln horizontal zurückziehbar sind, und daß unter den beiden Formteilgreifern eine Hub- und Kippeinrichtung für einzelne Formteile angeordnet ist.

Diese Vorstapeleinrichtung ermöglicht in besonders einfacher Weise die Bildung des Vorstapels. Jeweils einer der beiden Formteilgreifer der vier Hubeinheiten dient dazu, in seiner oberen Stellung den vollständigen Vorstapel zu halten, bis er von der Greifvorrichtung übernommen wird. Währenddessen bilden die jeweils anderen vier Formteilgreifer eine gemeinsame Aufnahme, in der der nächste Vorstapel dadurch gebildet wird, daß die Hub- und Kippeinrichtung nacheinander die einzelnen Formteile erfaßt, um einen gewissen Winkel kippt, in die jeweils vorgegebene Stellung anhebt und zwischen den Formteilgreifem wieder horizontal ausrichtet, so daß das Formteil dort gehalten wird. Nachdem der obere Vorstapel von der Greifvorrichtung übermommen wurde und der nächste Vorstapel gebildet ist, fährt dieser nach oben, während die jetzt freigewordenen Formteilgreifer zurückgezogen und nach unten gefahren werden, um zwischen sich den nächsten Vorstapel aufzunehmen.

Um eine rasche Anpassung an Formteile unterschiedlicher Abmessungen zu ermöglichen, sind die Hubeinheiten in einem Grundgestell quer und längs zu den aufzunehmenden Formteilen verstellbar aufgenommen. Zur Umstellung genügt es, die einzelnen Hubeinheiten in Verrichtung zu verfahren bis die Formteilgreifer auf den Rand der neuen Formteile eingestellt sind. Zweckmäßigerweise sind die Hubeinheiten hierzu auch jeweils um eine senkrechte Schwenkachse schwenkbar, um auf den oftmals nicht parallelen Kantenverlauf der Formteile eingestellt zu werden.

Weitere vorteilhafte Ausgestaltungen des Erfindungsgedankens sind Gegenstand weiterer Unteransprüche.

Nachfolgend wird ein Ausführungsbeispiel der Erfindung näher erläutert, das in der Zeichnung dargestellt ist. Es zeigt:

Fig. 1 eine vereinfachte Draufsicht auf eine am Ende einer Pressenstraße angeordnete Vorrichtung zum Stapeln von Formteilen in Stapelbehältern,

Fig. 2 eine vergrößerte Draufsicht auf die Vorstapeleinrichtung aus Fig. 1,

Fig. 3 einen Teilschnitt längs der Linie III-III In Fig. 2,

Fig. 4a, b Seitenansicht des Greiferrahmens in Richtung des Pfeiles IV in Fig. 1 in vergrößerter Darstellungsweise und

Fig. 5 eine verkleinerte Draufsicht ähnlich der Fig. 1 auf eine Doppelstation am Ende einer Pressenstraße.

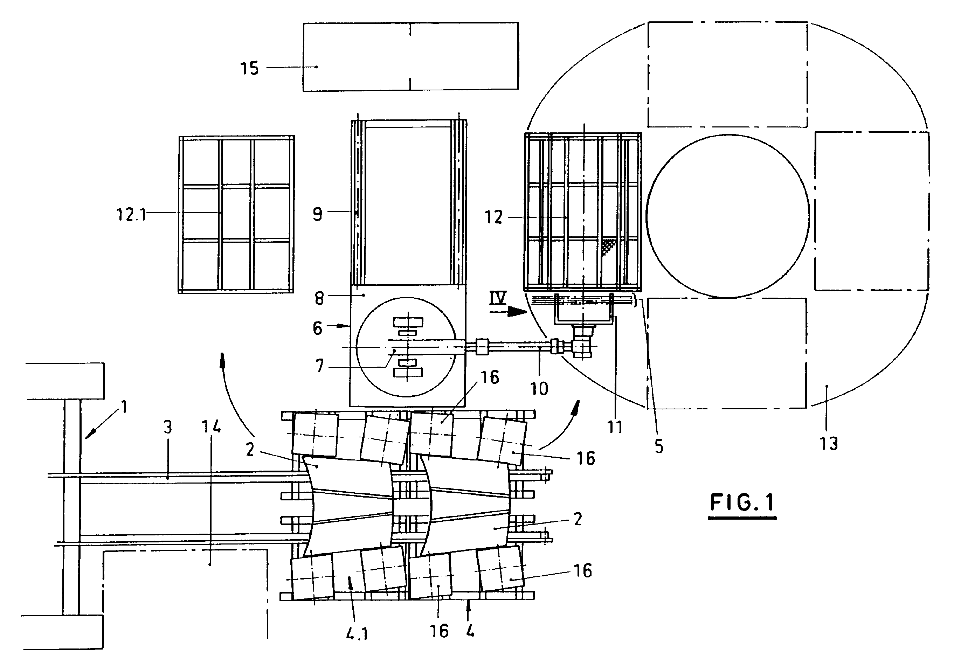

Die in Fig. 1 in einer vereinfachten Draufsicht gezeigte Vorrichtung dient der Entsorgung einer Pressenstraße 1, deren Ende in der Zeichnung nur angedeutet ist. Die auf der Pressenstraße 1 hergestellten großen, im wesentlichen flachen Formteile 2, bei dem dargestellten Ausführungsbeispiel Motorhauben für Kraftfahrzeuge, gelangen auf einem Längsförderer 3, der beispielsweise aus zwei parallelen Förderbändern besteht, in eine Vorstapeleinrichtung 4, die später noch näher erläutert wird.

Dort werden aus mehreren einzelnen Formteilen 2 Vorstapel 5 gebildet, die beispielsweise vier Formteile 2 umfassen, die in vorgegebenem bestand übereinander gehalten werden.

Der so gebildete Vorstapel 5 wird von einer Greifvorrichtung 6 übernommen, die einen herkömmlichen

EP 0 426 694 B1

Industrieroboter 7 aufweist, der auf einem Schlitten 8 um eine senkrechte Achse schwenkbar aufgenommen ist. Der Schlitten 8 ist entlang einer Schlittebahn 9 quer zur Längsrichtung des Längsförderers 3 verfahrbar.

An seinem Roboterarm 10 trägt der Industrieroboter 7 auswechselbar einen Greiferrahmen 11, der mit später noch näher erläuterten Greifelementen zum Aufnehmen und Halten des Vorstapels 5 versehen ist.

Auf der einen Seite der Schlittenbahn 9 steht ein Stapelbehälter 12 zur stehenden geordneten Aufnahme der Formteile , und zwar der Gutteile, die keiner Nacharbeit bedürfen. Dieser Stapelbehälter 12 ist auf einer (nicht dargestellten) Verschiebebühne oder einem in Fig. 1 nur angedeuteten Behälterkarussell 13 aufgenommen. Um den Stapelbehälter 12 in seine in Fig. 1 gezeigte Beschickungssteltung neben der Schlittenbahn 9 zu bringen, wird das Behälterkarussell 13 jeweils um einen Winkelschritt, im gezeigten beispiel jeweils um 90°, weitergeschaltet. In den übrigen drei Stellungen des Behälterkarussells 13 können die für die bereitstellung bzw. den Abtransport des Stapelbehälters 12 erforderlichen Maßnahmen durchgeführt werden, insbesondere die Bereitstellung, das Öffnen bzw. Verschließen und die Übernahme auf eine Tansporteinrichtung für den behälter, beispielsweise ein (nicht gezeigtes) gleisloses Flurförderzeug.

In Laufrichtung des Längsförderers 3 gesehen ist vor der Vorstapeleinrichtung 4 eine weitere Vorstapeleinrichtung 4.1 angeordnet die in gleicher Weise wie die Vorstapeleinrichtung 4 aufgebaut ist und zur Aufnahme der Nacharbeitsteile dient. In einer zwischen dem Ende der Pressenstraße 1 und der Vorstapeleinrichtung 4.1 liegenden Kontrollstation 14 wurden die von der Pressenstraße 1 entnommenen Formteile 2 geprüft, und es wurde entschieden, ob es sich um ein Gutteil oder ein Nacharbeitsteil handelt. Die Nacharbeitsteile werden bereits in der Vorstapeleinrichtung 4.1 angehalten und aufgenommen während die Gutteile durch die Vorstapeleinrichtung 4.1 hindurch bis in die Vorstapeleinrichtung 4 taufen und dort aufgenommen werden.

Beide Vorstapeleinrichtungen 4 und 4.1 liegen im Greifbereich des Industrieroboters 7, der auch die Nacharbeitsteile aus der Vorstapeleinrichtung 4.1 in der schon beschriebenen Weise übernimmt und in einen zweiten Stapelbehälter 12.1 absetzt, der sich auf der dem ersten Stapelbehälter 12 gegenüberliegenden Seite der Schlittenbahn 9 befindet.

An dem Ende der Schlittenbahn 9, das den Vorstapeleinrichtungen 4 und 4.1 abgekehrt ist, ist ebenfalls noch im Greifbereich des Industrieroboters 7 eine Ablage 15 für jeweils zwei Greiferrahmen 11 vorgesehen. Bei der Umstellung auf Formteile 2 von anderen Abmessungen wird der bisher verwendete Greiferrahmen 11 auf dem einen Ablageplatz der Ablage 15 abgelegt, und der Industrieroboter 7 übernimmt mit seinem Roboterarm 10 einen neuen Greiferrahmen 11, der auf der anderen Ablagefläche der Ablage 15 bereitgestellt ist.

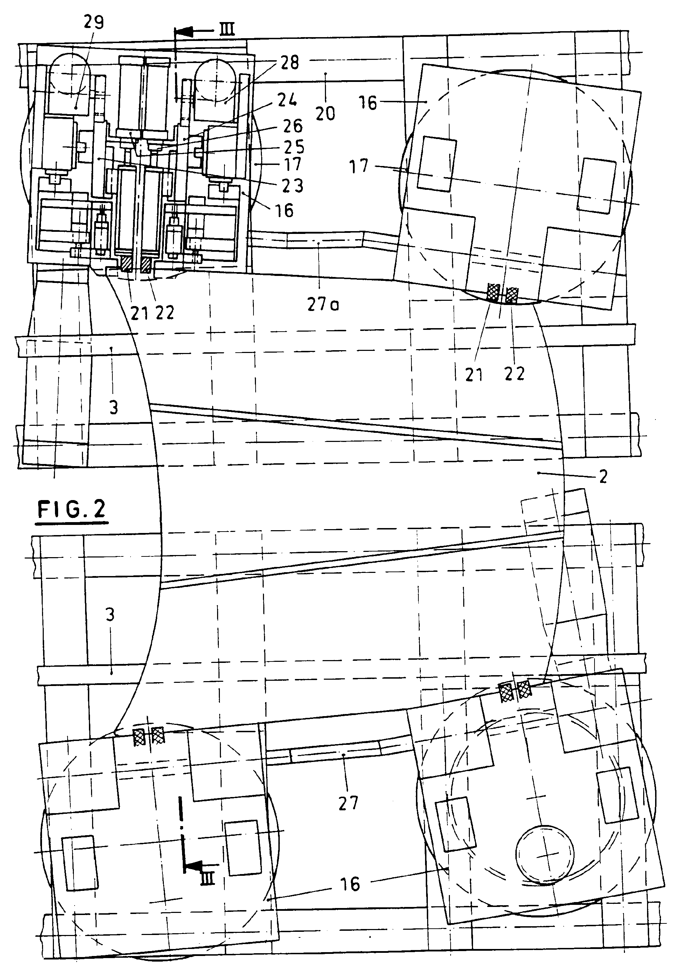

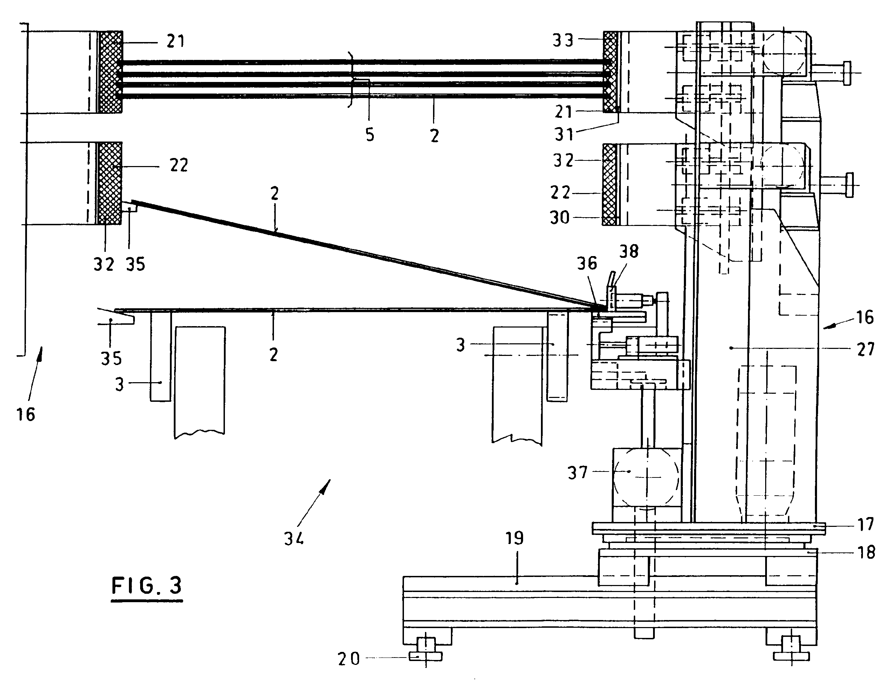

In den Fig. 2 und 3 sind Einzelheiten der Vorstapeleinrichtung 4 bzw. 4.1 dargestellt.

Die Vorstapeleinrichtung 4 weist vier Hubeinrichtungen 16 auf, die jeweils auf einem Drehtisch 17 um eine senkrechte Schwenkachse schwenkbar sind. Der Drehtisch 17 befindet sich auf einem Schlitten 18, der in Führungen 19 eines Grundgestells 20 quer zur Längsrichtung des Längsförderers 3 verfahrbar ist, Zur Umstellung auf Formteile 2 von unterschiedlichen Abmessungen sind die vier Hubeinheiten 16 somit querverfahrbar und so schwenkbar, daß sie zu den meist nicht parallelen gegenüberliegenden Kanten der Formteile 2 ausgerichtet werden können, wie in den Fig. 1 und 2 deutlich erkennbar ist.

Jede der Hubeinheiten 16 weist zwei gesondert bewegbare Formteilgreifer 21, 22 auf. Jeder Formteilgreifer 21 bzw. 22 ist an einem gesonderten Hubschlitten 23 bzw. 24 gelagert und kann dort durch eine Vorschubeinheit 25 bzw. 26 horizontal vorgeschoben und zurückgezogen werden. Die Hubschlitten 23, 24 sind an einem vertikalen Führungsständer 27 mittels Hubantrieben 28 bzw. 29 unabhängig voneinander vertikal verfahrbar. Die Hubschlitten 23, 24 und die daran aufgenommenen Formteilgreifer 21 bzw. 22 sind in der Draufsicht so nebeneinander angeordnet, daß sie bei ihren Hubbewegungen aneinander vorbeigefahren werden können. Jeder Formteilgreifer 21, 22 weist eine vertikale Greiferplatte 30, 31 auf, an deren Außenseite ein Greifpolster 32 bzw. 33 aus elastisch verformbarem Material, vorzugsweise Moosgummi, oder eine Zahnleiste angebracht ist. Wie in Fig. 3 am Beispiel der oberen Formteilgreifer 21 gezeigt ist, nehmen diese zwischen sich den Vorstapel 5 aus Formteilen 2 auf, die übereinander im vorgegeben bestand gehalten werden, um dort von dem Greiferrahmen 11 übernommen zu werden. Gelenkwellen 27a verbinden jeweils die beiden benachbarten Hubeinheiten 16, um einen synchronen Antrieb der Hubbewegungen zu gewährleisten.

Zur Bildung des Vorstapels 5 ist unterhalb der Formteilgreifer 21, 22 in der Vorstapelstation 4 eine Hub- und Kippeinrichtung 34 angeordnet, die in jeder Hubeinheit 16 einen einzelnen Hubanschlag 35 bzw. 36 aufweist. Diese Hubanschläge 35 bzw. 36 sind jeweils durch einen Hubantrieb 37 anhebbar und absenkbar. Während die Hubanschläge 35 auf der einen Seite des Längsförderers 3 aus einfachen Mitnehmern mit nach innen abfallender Oberfläche bestehen, sind die Hubanschläge 36 auf der anderen Seite des Längsförderers 3 nicht nur seitlich verstellbar, sondern auch jeweils mit einem horizontal verfahrbaren Kantenanschlag 38 versehen.

In Fig. 3 ist gezeigt, daß ein auf dem Längsförderer 3 herangefördertes Formteil 2 zunächst in horizontaler Lage von den Hubanschlägen 35 und 36 auf beiden Seiten des Längsförderers angehoben wird. Sodann werden die Hubanschläge 35 auf der einen Seite so weit angehoben, bis sie sich im Bereich des jeweils zugeordneten unteren Formteilgreifers 22 in der für dieses Formteil vorgesehenen, durch eine Programmsteuerung vorgegebenen Höhenstellung befinden. Ausgehend von dieser Stellung wird das Formteil 2 durch die auf der anderen Seite befindlichen Hubanschläge 36 ebenfalls angehoben und zugleich durch die Kantenanschläge 38 verschoben, so daß seine obere Kante sich in das Greifpolster 32 des Formteilgreifers 22 eindrückt und von diesem gehalten wird. Wenn die Formteilgreifer 22 Zahnleisten aufweisen, werden die Kanten der Formteile in die Lücken der Zähne eingefügt. Sobald das Formteil 2 auch an seiner vom Hubanschlag 36 getragenen Seite bis in die horizontale Stellung angehoben wurde, fährt der Kantenanschlag 38 zurück und gibt das Formteil 2 frei, so daß es unter der elastischen Wirkung der Greifpolster 32 auf beiden Seiten gehalten wird.

Das nächste Formteil wird in gleicher Weise zwischen die Greifpolster 32 eingesetzt, nachdem die Formteilgreifer 22 auf beiden Seiten um den Betrag angehoben wurden, der dem vorgegebenen gegenseitigen Abstand der Formteile 2 entspricht.

Während auf diese Weise der untere Vorstapel gebildet wird, wird der vorher gebildete Vorstapel 5 vom Greiferrahmen 11 übernommen und in den Stapelbehälter 12 transportiert. Sobald auch der untere Vorstapel 5 vervollständigt ist, werden die ihn tragenden Formteilgreifer 22 nach oben gefahren. Zugleich werden die oberen Formteilgreifer 21 nach beiden Seiten zurückgezogen und nach unten verfahren, wobei sie sich an den Formteilgreifern 22 und den darin aufgenommenen Formteilen 2 unbehindert vorbeibewegen. In ihrer unteren Stellung werden die Formteilgreifer 21 dann wieder horizontal vorgefahren und stehen für die bereits beschriebene Aufnahme neuer Formteile 2 bereit.

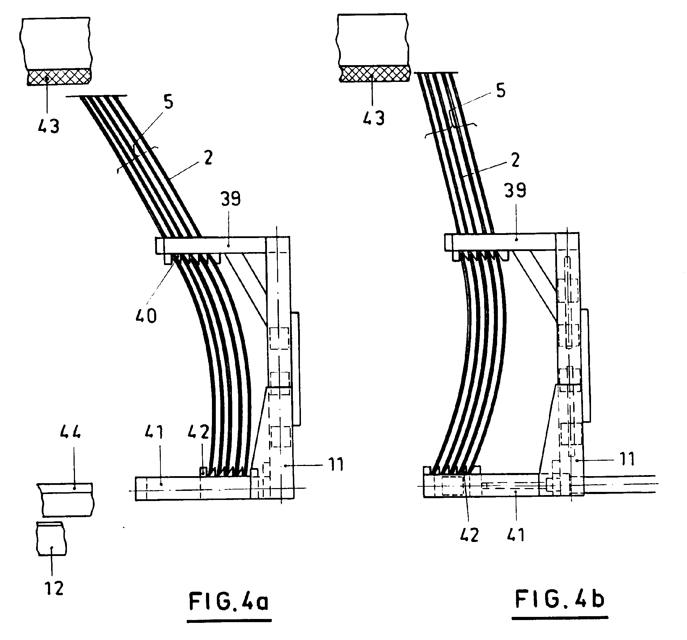

Fig. 4a zeigt die Aufnahme der Formteile 2 im Greiferrahmen 11. Im Greiferrahmen 11 wird jeweils ein Vorstapel 5 von mehreren, beispielsweise fünf Formteilen 2 aufgenommen.

Am oberen Ende des Greiferrahmens 11 springen zwei starr befestigte Arme 39 vor, die an ihrer Unterseite jeweils eine Zahnleiste 40 tragen. In den Fig. 4a und 4b ist als Beispiel eines Formteils 2 eine Kraftfahrzeugtür gezeigt, bei der die Arme 39 durch die Fensteröffnung ragen und die Zahnleisten 40 am unteren Rand der Fensteröffnung angreifen.

Am unteren Ende des Greiferrahmens 11 sind ebenfalls zwei vorspringende Arme 41 angebracht, an denen eine Zahnleiste 42 horizontal verschiebar geführt ist. In der zurückgezogenen Stellung der Zahnleiste 42 werden die Formteile 2 leicht geneigt gehalten. In dieser Stellung werden die Formteile 2 zwischen die Kopfleisten 43 und die Bodenleisten 44 des Stapelbehälters 12 eingeführt, wobei sich der Industrieroboter 7 aus der in Fig. 1 gezeigten Stellung nach hinten entlang der Schlittenbahn 9 bewegt, bis der Vorstapel 5 von Formteilen 2 seine vorgegebene Stellung im Stapelbehälter 12 erreicht hat. An dieser Stelle wird die untere Zahnleiste 42 aus der Stellung nach Fig. 4a in die in Fig. 4b gezeigte Stellung vorgefahren, und alle Formteile 2 des Vorstapels 5 werden dabei aufgerichtet. Dadurch treten die Formteile 2 in Eingriff mit den Kopfleisten 43 und den Bodenleisten 44 und werden zwischen diesen gehalten.

Der Greiferrahmen 11 wird dadurch geöffnet, daß die unteren Arme 41 von den oberen Armen 39 wegbewegt werden. In dieser geöffneten Stellung wird der Greiferrahmen 11 aus dem Stapelbehälter 12 herausbewegt und wird in seine Stellung zur Übernahme des nächsten Vorstapels 5 in der Vorstapeleinrichtung 4 gebracht. In entsprechender umgekehrter Weise erfolgt das Entladen des Stapelbehälters 12 durch einen Industrieroboter der dem dargestellten Industrieroboter 7 entspricht. Stattdessen kann die Entnahme der Formteile 2 aus dem Stapelbehälter 12 auch von Hand erfolgen.

Das Beladen des anderen Stapelbehälters 12.1 mit den in der Vorstapeleinrichtung 4.1 gesammelten Nacharbeitsteilen erfolgt in entsprechender Weise durch denselben Industrieroboter 7.

Anstelle der beschriebenen Stapelbehälter 12, 12.1 mit starren Kopfleisten und Bodenleisten können auch mit antreibbaren Förderketten versehene Stapelbehälter verwendet werden. Der Vorstapel 5 von Formteilen 2 wird nur an den Anfang der Förderketten gegeben. Ein Längsverfahren des Industrieroboters 7 und eine Schrägstellung der Formteile 2 im Greiferrahmen sind nicht erforderlich. Die Formteile 2 werden aufrechtstehend an die Förderketten des Stapelbehälters abgegeben.

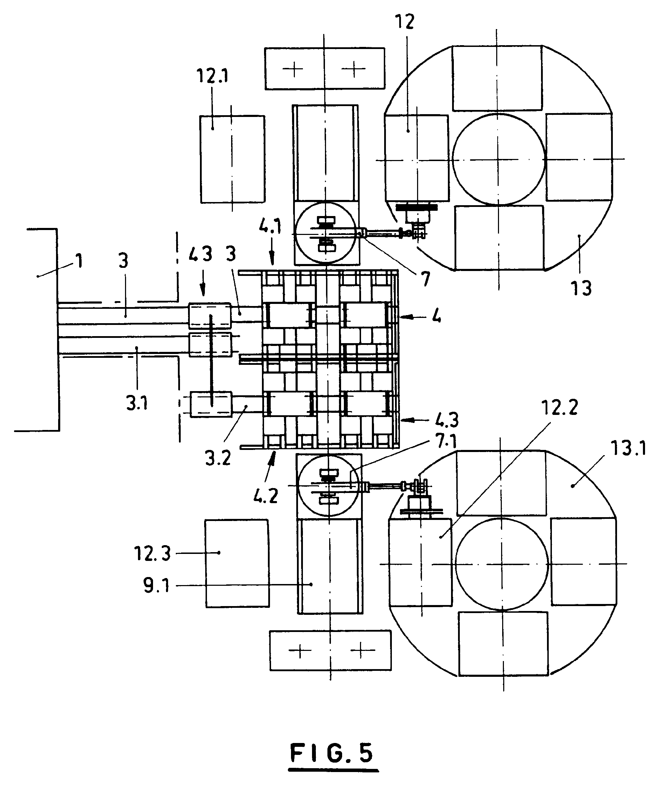

Fig. 5 zeigt, daß sich unter Verwendung der beschriebenen Vorrichtungen in sehr raumsparender Weise eine universelle Entsorgung der Pressenstraße 1 durchführen läßt. Hier ist angedeutet, daß neben dem ersten Längsförderer 3 ein zweiter Längsförderer 3,1 aus der Pressenstraße 1 herausführt. Auf den beiden Längsförderern 3 und 3.1 werden beispielsweise gleichzeitig hergestellte rechte und linke Teile, wie rechte und linke Türen, herangeführt. In einer anschließenden Quertransportstation 43 werden alle auf dem Längsförderer 3.1 angeförderten Teile in Querrichtung auf einen sich anschließenden Längsförderer 3.2 überführt. Während der geradlinig weitergeführte erste Längsförderer 3 in der beschriebenen Weise durch die Vorstapeleinrichtungen 4.1 und 4 geführt wird, wird der Längsförderer 3.2 in gleicher Weise durch zwei hintereinandergeschaltete Vorstapeleinrichtungen 4.2 und 4.3 geführt, Diese gehören zu einer spiegelbildlich zu der bisher beschriebenen Anlage ausgeführten Anlage. In dieser übernimmt ein Industrieroboter 7.1 in gleicher Weise wie der Industrieroboter 7 die in Vorstapeln zusammengefaßten Formteile. Er legt die als Gutteile festgestellten Formteile in einen Stapelbehälter 12.2, der sich auf einem Behälterkarussell 13.1 befindet. Die aus der Vorstapeleinrichtung 4.2 übernommenen Nacharbeitsteile werden vom Industrieroboter 7.1 in einem auf der anderen Seite seiner Schlittenbahn 9.1 angeordneten Stapelbehälter 12.3 in der beschriebenen Weise abgesetzt.

Man erkennt aus Fig. 5 daß auch bei doppelter Ausführung der Entsorgungsanlage für die Pressenstraße 1 der Platzbedarf so gering ist, daß der üblicherweise am Ende von Pressenstraßen zur Verfügung stehende Platz auch hierfür ausreicht. Man erhält eine vollautomatisch arbeitende Entsorgungsanlage für rechte und linke Formteile bei getrennter Stapelung von Gutteilen und Nacharbeitsteilen.

## Patentansprüche

1. Vorrichtung zum Stapeln von Formteilen (2), insbesondere großen Blechstanzteilen im Automobilbau, in stehender Anordnung in gegenseitigem Abstand in Stapelbehältern (12), mit einer einen horizontalen Vorstapel (5) von mehreren Formteilen (2) bildenden Vorstapeleinrichtung (4) und mit einer den Vorstapel (5) aufnehmenden Greifvorrichtung (6), die den Vorstapel (5) in eine aufrechte Stellung schwenkt und in den Stapelbehälter (12) verfahrbar ist, wobei die Greifvorrichtung (6) einen Industrieroboter (7) aufweist, der an einem in mehreren Bewegungsachsen bewegbaren Roboterarm (10) einen Greiferrahmen (11) zur Aufnahme des Vorstapels (5) trägt, dadurch gekennzeichnet, daß am Ende eines Längsförderers (3) für einzelne Formteile (2) zwei Vorstapeleinrichtungen (4, 4.1) hintereinander angeordnet sind, die im Greifbereich eines gemeinsamen Industrieroboters (7) liegen, und daß zwei Stapelbehälter (12, 12.1) beiderseits des Industrieroboters (7) angeordnet sind.

2. Vorrichtung nach Anspruch 1, dadurch gekennzeichnet, daß der Industrieroboter (7) auf einem längs einer Schlittenbahn (9) verfahrbaren Schlitten (8) aufgenommen ist.

3. Vorrichtung nach Anspruch 1 oder 2, dadurch gekennzeichnet, daß neben dem Industrieroboter (7) ein mehrere Stapelbehälter (12) aufnehmendes Behälterkarussel (13) oder eine Verschiebebühne angeordnet ist.

4. Vorrichtung nach Anspruch 1, dadurch gekennzeichnet, daß der Greiferrahmen (11) auswechselbar am Roboterarm (10) angeordnet ist und daß im Greifbereich des Industrieroboters (7) eine Ablage (15) für mindestens zwei Greiferrahmen (11) liegt.

5. Vorrichtung nach Anspruch 1 oder 2, dadurch gekennzeichnet, daß die Vorstapeleinrichtung (4, 4.1) jeweils vier den Rand der Formteile (2) haltende Hubeinheiten (16) aufweist, daß jede Hubeinheit (16) zwei unabhängig voneinander höhenverfahrbare Formteilgreifer (21, 22) aufweist, die einzeln horizontal zurückziehbar sind, und daß unter den beiden Formteilgreifern (21, 22) eine Hub- und Kippeinrichtung (34) für einzelne Formteile (2) angeordnet ist.

6. Vorrichtung nach Anspruch 5, dadurch gekennzeichnet, daß die Hubeinheiten (16) in einem Grundgestell (20) quer un längs zu den aufzunehmenden Formteilen (2) verstellbar geführt sind.

7. Vorrichtung nach Anspruch 5, dadurch gekennzeichnet, daß die Hubeinheiten (16) jeweils um eine senkrechte Schwenkachse schwenkbar sind.

8. Vorrichtung nach Anspruch 5, dadurch gekennzeichnet, daß jeder der beiden Formteilgreifer (21, 22) einer Hubeinheit (16) an einem gesonderten Hubschlitten (23, 24) horizontal verschiebbar aufgenommen ist, der an einem vertikalen Führungsständer (27) derart verfahrbar ist, daß die beiden Hubschlitten (23, 24) aneinander vorbeibewegbar sind.

9. Vorrichtung nach Anspruch 5, dadurch gekennzeichnet, daß jeder Formteilgreifer (21, 22) eine vertikale Greiferplatte (30, 31) mit einem Greifpolster (32, 33) aus elastisch verformbarem Material oder eine Zahnleiste trägt.

10. Vorrichtung nach Anspruch 9, dadurch gekennzeichnet, daß das elastisch verformbare Material Moosgummi ist.

11. Vorrichtung nach Anspruch 5, dadurch gekennzeichnet, daß die Hub- und Kippeinrichtung (34) für einzelne Formteile (2) aus einzelnen Hubanschlägen (35, 36) besteht, die jeweils an einer Hubeinheit (37) angeordnet und auf beiden Seiten des Formteils (2) unabhängig anhebbar sind.

12. Vorrichtung nach Anspruch 11, dadurch gekennzeichnet, daß die Hubanschläge (36) auf der einen Seite der Formteile (2) jeweils einen horizontal verfahrbaren Kantenanschlag (38) aufweisen.

13. Vorrichtung nach einem der Ansprüche 1-12, dadurch gekennzeichnet, daß alle Verstellbewegungen, Transport- und/oder Hubbewegungen programmgesteuert erfolgen.

## Claims

1. Device for stacking preforms (2), especially large stamped sheet metal parts in automobile construction, in a standing arrangement at a mutual interval in stack containers (12), having a prestacking device (4) forming a horizontal preliminary stack (5) of a plurality of preforms (2) and having a gripper device (6) taking up the

EP 0 426 694 B1

preliminary stack (5) which swings the preliminary stack (5) into an upright position and which can be moved into the stack container (12), the gripper device (6) having an industrial robot (7) which carries a gripper arm (11) for holding the preliminary stack (5) on a robot arm (10) which can be moved in several movement axes, characterised in that, at the end of a longitudinal conveyor (3) for individual preforms (2), two preliminary stacking devices (4, 4.1) are arranged consecutively, which lie within the gripping range of a common industrial robot (7), and that two stack containers (12, 12.1) are arranged on both sides of the industrial robot (7).

2. Device according to Claim 1, characterised in that the industrial robot (7) is held on a carriage (8) which can be moved along a carriage way (9).

3. Device according to Claim 1 or 2, characterised in that a container carrousel (13) or a sliding stage holding several stack containers (!2) is arranged near to the industrial robot (7).

4. Device according to Claim 1, characterised in that the gripper arm (11) is arranged interchangeably at the robot arm (10) and that a place of deposit (15) for at least two gripper arms (11) is situated within the gripping range of the industrial robot (7).

5. Device according to claim 1 or 2, characterised in that the prestacking device (4, 4.1) has in each case four lifting units (16) holding the edges of the preforms (2), that each lifting unit (16) has two preform grippers (21, 22) which can be moved with regard to height independently of each other, which can individually be withdrawn horizontally, and that a lifting and tilting device (34) for individual preforms (2) is arranged below the two preform grippers (21, 22).

6. Device according to Claim 1, characterised in that the lifting units (16) are guided adjustably in a basic frame (20) transversely and alongside the preforms (2) to be taken up.

7. Device according to Claim 5, characterised in that the lifting units (16) can each be slewed around a perpendicular slewing axis.

8. Device according to Claim 5, characterised in that each of the two preform grippers (21, 22) of a lifting unit (16) is held so that is can be slid horizontally on a separate lifting carriage (23, 24) which can be moved on a vertical guide stand (27) in such a manner that the two lifting carriages (23, 24) can be moved past each other.

9. Device according to Claim 5, characterised in that each preform gripper (21, 22) carries a vertical gripper plate (30, 31) with a gripping cushion (32,33) made of elastically deformable material, or a toothed strip.

10. Device according to Claim 9, characterised in that the elastically deformable material is cellular rubber.

11. Device according to Claim 5, characterised in that the lifting and tilting device (34) for individual preforms (2) consists of individual lifting shoulders (35, 36) which are each arranged at a lifting unit (37) and can be lifted independently on the two sides of the preform (2).

12. Device according to Claim 11, characterised in that the lifting shoulders (36) on the one side of the preforms (2) each have a horizontally movable edge shoulder (38).

13. Device according to one of Claims 1 - 12, characterised in that all adjustment movements, transport movements and/or lifting movements are program-controlled.

**Revendications**

1. Dispositif d'empilage de pièces préformées (2), notamment de grosses pièces de tôle fabriquées à la presse dans l'industrie automobile, en agencement vertical à distance mutuelle dans des caisses d'empilage (12), avec un dispositif de pré-empilage (4) formant une avant-pile (5) de plusieurs pièces préformées (2) et un dispositif de préhension (6) recevant l'avant-pile (5), lequel dispositif fait basculer l'avant-pile en position verticale et peut être déplacé dans la caisse d'empilage (12), le dispositif de préhension (6) comportant un robot industriel (7) qui porte, sur un bras déplaçable selon plusieurs axes de mouvement, un cadre preneur (11) pour recevoir l'avant-pile (5), caractérisé en ce qu'à l'extrémité d'un transporteur longitudinal (3) destiné aux pièces préformées (2) individuelles sont agencés l'un derrière l'autre deux dispositifs de pré-empilage (4, 4.1) qui se situent à portée de préhension d'un robot industriel commun (7), et en ce que deux caisses d'empilage (12, 12.1) sont agencées des deux côtés du robot industriel (7).

2. Dispositif selon la revendication 1, caractérisé en ce que le robot industriel (7) est logé sur un coulisseau (8) qui peut se déplacer le long d'une glissière (9).

3. Dispositif selon la revendication 1 ou 2, caractérisé en ce que, à côté du robot industriel (7), est agencé un carrousel (13) recevant plusieurs caisses d'empilage (12) ou une plate-forme mobile.

4. Dispositif selon la revendication 1, caractérisé en ce que le cadre preneur (11) est agencé sur le bras (10) du robot de manière interchangeable et un récepteur (15) prévu pour au moins deux cadres preneurs (11) est agencé à portée de préhension du robot industriel (7).

5. Dispositif selon la revendication 1 ou 2, caractérisé en ce que le dispositif de pré-empilage (4, 4.1) pré-

7

sente respectivement quatre unités de levage (16) soutenant le rebord de la pièce préformée (2), chaque unité de levage (16) comporte deux preneurs de pièce préformée (21, 22) déplaçables en hauteur indépendamment l'un de l'autre et un dispositif de levage et de basculement (34) destiné aux pièces préformées (2) est agencé sous les deux preneurs (21, 22).

6. Dispositif selon la revendication 5, caractérisé en ce que les unités de levage (16) sont guidées dans un bâti de base (20) de manière à pouvoir se déplacer transversalement et longitudinalement par rapport aux pièces préformées (2) à recevoir.

7. Dispositif selon la revendication 5, caractérisé en ce que les unités de levage (16) peuvent respectivement pivoter autour d'un pivot vertical.

8. Dispositif selon la revendication 5, caractérisé en ce que chacun des deux preneurs de pièces préformées (21, 22) d'une unité de levage (16) est reçu de manière à pouvoir se déplacer horizontalement sur un coulisseau de levage séparé (23, 24) qui peut se déplacer sur un montant de guidage vertical en sorte que les deux coulisseaux de levage (23, 24) puissent se déplacer l'un à côté de l'autre.

9. Dispositif selon la revendication 5, caractérisé en ce que chaque preneur de pièce préformée (21, 22) porte une plaque de préhension verticale (30, 31) avec un tampon de préhension (32, 33) constitué d'une matière élastique déformable ou une latte dentée.

10. Dispositif selon la revendication 9, caractérisé en ce que la matière élastique déformable est constituée de caoutchouc cellulaire.

11. Dispositif selon la revendication 5, caractérisé en ce que le dispositif de levage et de basculement (34) destiné aux pièces préformées (2) individuelles est constitué de butées de levage (35, 36) individuelles qui sont agencées respectivement sur une unité de levage (37) et peuvent être soulevées indépendamment sur les deux côtés de la pièce préformée (2).

12. Dispositif selon la revendication 11, caractérisé en ce que les butées de levage (36) présentent respectivement un butée de chant (38) qui peut se déplacer horizontalement sur le premier côté de la pièce préformée (2).

13. Dispositif selon l'une quelconque des revendications 1-12, caractérisé en ce que tous les déplacements, les transports et/ou les levages se font selon une séquence programmée.

FIG.1

FIG.2

FIG. 3

FIG.4a

FIG.4b

F I G. 5